# EUROPEAN PATENT SPECIFICATION

(11) **EP 2 657 619 B1**
(45) Date of publication and mention of the grant of the patent: **11.03.2020**
(21) Application number: 13397509.4
(22) Date of filing: 17.04.2013
(51) Int. Cl.: F24D 19/10, F24D 3/18, F24D 11/02, F24D 17/02, F24F 11/30, F24F 11/62

(54) **Method and device for controlling a hybrid heating and ventilation system**
Methode und Gerät zum Steuern eines hybriden Heiz- und Lüftungssystems
Procédé et dispositif de contrôle d'un système de chauffage et ventilation hybride

(30) Priority: 26.04.2012 FI 20125455
(43) Date of publication of application: 30.10.2013
(73) Proprietor: Datasteel Oy, 64700 Teuva (FI)
(72) Inventor: Lehtinen, Tero, 64760 Peltola (FI)
(74) Representative: Laine IP Oy

(56) References cited:
- EP-A2- 2 151 637
- DE-A1- 10 102 041
- DE-A1-102006 028 521
- DE-A1-102008 041 715
- DE-A1-102010 017 148

## Description

The invention relates to a method and apparatus for controlling a hybrid heating and ventilation system of a building, the system comprising a heating and ventilation apparatus having, in the same housing, a heat pump, a heat exchanger cell operating using the countercurrent principle, and at least one heating radiator for the incoming air, further comprising solar collectors, main energy storage and preheating storage units, a heat accumulator and a central control unit for the system.

Earlier, solar energy has been utilized by feeding a propylene glycol mixture heated by the sun to a solar coil of an energy storage unit, said propylene glycol mixture heating the energy storage unit provided the temperature of said mixture from solar collectors is about 7 °C higher than that of the energy storage unit. In general, the temperature of hot tap water necessarily being about 60 °C, the temperature of the propylene glycol mixture from solar collectors should be at least between +50 and +60 °C to make the feeding thereof into the energy storage unit feasible. Such a high required minimum temperature implicates that the time period for the utilization of solar energy, for example, in Finland is rather limited since propylene glycol mixtures having such high temperatures are only obtained for certain short periods during, respectively, the day and the year.

Another way to utilize solar energy for heating buildings is to circulate collector fluid of a geothermal energy pump through solar collectors for elevating the temperature of the collector fluid prior to its utilization in the geothermal energy pump. In this case it is necessary to use propylene glycol as the collector fluid, said propylene glycol being more resistant to the heat in the solar collectors, whereas in cold ground the efficiency of this fluid is not as high as that of ethylene glycol normally used in geothermal energy pumps.

A third way to utilize solar energy is the direct conversion thereof into electricity, this conversion, however, requiring rather high investment costs in comparison with the profit attained.

DE10102041 discloses a heating plant having a heat source, such as solar panels, with a first part circuit, connected at input and output to a hydraulic switch connected to a second part circuit with an input line. In the plant, a distribution switch is connected selectively to the primary input of the heat pump and/or the input of the heat store.

DE 102006028521 discloses a heating system, comprising: a heat source, a heat reservoir, a heat pump which withdraws heat from the heat reservoir through its primary side and supplies it to a consumer through its secondary side, a buffer reservoir which can be supplied with heat from the heat source and from which heat can be withdrawn by the consumer, the heat source forming a first partial circuit with a return line and a flow line into which partial circuit the buffer reservoir can be linked through a valve or a switch in a breath-responsive manner, so that the heat source in the first primary circuit, disposed in parallel to the heat reservoir, is connected to the primary side of the heat pump in a manner controllable through a mixing valve.

An object of the present invention is the more efficient exploitation of renewable energy sources with a high coefficient of performance. The main principle is to exploit renewable energy sources as efficiently as possible only with the input power of a water circulating pump, the average being 20 to 70 W/h.

This object is attained with the method of the invention, characterized in that solar energy is utilized in four different ways:
- once propylene glycol circulating in solar collectors has attained a temperature of +8 °C, the thermal content thereof is transferred by a heat exchanger of the central control unit into ethylene glycol, which is in turn circulated through the preheating radiator in a duct for incoming air of the heating and ventilation apparatus thus heating the air introduced from the outside;
- once the temperature of the propylene glycol from the solar collectors is about +30 °C, propylene glycol is directed by the central control unit to pass through a solar coil of the preheating storage unit to unload its thermal content, the temperature of said storage unit being maintained by the heating and ventilation apparatus between about +25 and +30 °C;
- once the temperature of the propylene glycol from the solar collectors is over +60 °C, propylene glycol is directed by the central control unit through the solar coil in the main storage unit, and is further passed via the solar coil of the preheating storage unit to release more heat prior to being recirculated to the solar collectors;
- once both storage units have attained the temperature of +80 °C, propylene glycol from the solar collectors is directed by the central control unit through its heat exchangers for unloading heat into an ethylene glycol mixture adjusted to be circulated through a heat accumulator consisting of collector tubes for geothermal energy, located under the thoroughly isolated basement of a building, with a flow rate twice the flow rate of propylene glycol, thus preventing both boiling and damage in the solar collectors, while solar heat is stored in the heat accumulator, from where the heat is directed during cold winter season to heat the incoming air by circulating propylene glycol through the heat accumulator and preheating radiator in the heating and ventilating apparatus.

With a method according to the invention, the central control unit of the system always directs the solar energy to the very unit of the heating and ventilation apparatus where the thermal content of propylene glycol from solar collectors is most efficiently utilized.

In the heating and ventilation apparatus of the system, heat is first recovered from warm air leaving the building by an evaporator of a heat pump, said heat recovered being transferred through a heat exchanger associated with a condensing unit of the heat pump into heat storage units of the system, the average temperature of the exhaust air downstream of the evaporator unit being then between +2 and +5 °C, the exhaust air being passed through a heat exchanger cell operating by a countercurrent mode while, during heating periods, the incoming air is passed past the heat exchanger cell in case the outside air is warmer than the exhaust air downstream of the evaporator unit, or through the heat exchanger cell in case the outside air is cooler than the exhaust air downstream of the evaporator unit, whereas during hot weather periods, the air introduced from the outside is cooled by passing it through the heat exchanger cell.

If necessary, solar heat may be directed for heating the building by the incoming air by heating thereof at the range between +8 and +35 °C.

Outside and inside temperatures and the preheating storage unit are compared by the control means, which determines the correct moment for redirecting the thermal solar energy into the preheating storage unit. In general, solar heat is directed to the preheating storage unit already at approximately +30 °C. Explicitly, the purpose of two storage units is to maintain the temperature of the preheating storage unit by the heating and ventilation apparatus between about +25 and +30 °C. Thus, there is "room" in the preheating storage unit for solar heat or heat from a fireplace with integrated water circulation, and accordingly, they both may be exploited more efficiently.

During seasons with outside temperatures above -2 °C, the logic of the system turns off a compressor of the heat pump once the temperature of the main energy storage unit is in the necessary range of +55 °C to +60 °C, thus allowing air introduced from the outside to be heated to the necessary temperature level, that is to about 18 °C, only by the heat exchanger cell without any electric energy consumption by the heat pump.

In a system according to the invention, floor heating based on warm water circulation, and hot tap water of the building receive the thermal energy from the energy storage units of the system, these storage units, depending on the season, receiving their thermal energy from the heat exchanger of the heat pump and/or solar collectors, and optionally from a fireplace with integrated water circulation connected to the preheating storage unit by water circulation. Floor heating primarily receives energy from the preheating storage unit, and to obtain hot tap water, tap water is first circulated through a tap water preheating coil in the preheating storage unit, followed by circulation through a tap water coil in the main storage unit.

Water recirculated from the bottom of the energy storage units to the heat exchanger of the condenser is, if necessary, at least partly directed by an automatic thermostat through a secondary heating radiator in the duct for incoming air of the apparatus to obtain incoming air with a temperature of about 3 °C lower than that of the inside air, according to the recommendations for ventilation.

For cooling the incoming air feed during hot weather periods when the compressor of the heat pump is turned off, ethylene glycol is introduced, directed by the central control unit, into the preheating radiator in the duct for incoming air from the circulation loop in the ground connectable to the ethylene glycol circulation of the system.

A system for controlling the heating and ventilation of a building according to the invention is characterized in that the central control unit is connected:
- to solar collectors by a first propylene glycol circulation loop provided with a first circulation pump;
- to a preheating radiator arranged in the duct for incoming air of the heating and ventilation apparatus by first ethylene glycol circulation loop, provided with a second circulation pump and first and second electromagnetic three-way valves, wherein an electronic control means of the central control unit are configured such that said ethylene glycol circulation loop is adjusted to a heat exchange communication with the first propylene glycol circulation loop by means of the heat exchanger of the central control unit, when solar heat is attainable at about +7 °C above the temperature of the incoming air;
- to a solar coil, arranged in the preheating storage unit, by a second propylene glycol circulation loop, wherein the electronic control means are configured such that the second propylene glycol circulation loop is connected to the first propylene glycol circulation loop of the solar collectors through a third circulation pump, a third an electromagnetic three-way valve and a thermal three-way valve when solar heat is attainable at about +7 °C above the temperature of the preheating storage unit;
- to a solar coil, arranged in the main storage unit, by the third propylene glycol circulation loop, and further to a solar coil in the preheating storage unit, wherein the electronic control means are configured such that the third propylene glycol circulation loop is connected to the first propylene glycol circulation loop of the solar collectors through the third circulation pump, the third electromagnetic three-way valve and the thermal three-way valve when solar heat is attainable at above +60 °C; and
- to a heat accumulator arranged under the building by a second ethylene glycol circulation loop, wherein the electronic control means are configured such that said second ethylene glycol circulation loop is connected to the heat exchanger (V) of the central control unit through a circulating pump and the third ethylene glycol circulation loop provided with first and second electronic three-way valves when solar heat is attainable at above +80 °C, and wherein the electronic control means are configured such that in this case the second circulating pump is adjusted to operate at a rotating speed of at least twice the rotating speed of the first circulating pump in the first propylene glycol circulation loop of the solar collectors.

The volume of the preheating storage unit of the system is double compared to the volume of the main storage unit, thus allowing the preheating storage unit to receive more additional heat from solar collectors, or for instance from a fireplace with water circulation, which fireplace with water circulation may be connected to the preheating storage unit by a water circulation loop provided with a charging assembly.

The second ethylene glycol circulation loop passing to the heat accumulator of the system is also connected to a circulation loop in the ground, and wherein the electronic control means are configured such that directed by the first and second electronic three-way valves, the circulation loop in the ground is connected to the preheating radiator arranged in the duct for incoming air of the heating and ventilation apparatus in case the outside temperature measured by the electronic control means is higher than the inside temperature.

In the following, the invention is explained in more detail with reference to the appended drawings, in which
Figure 1 schematically shows an example of the hybrid heating and ventilation system according to the invention,

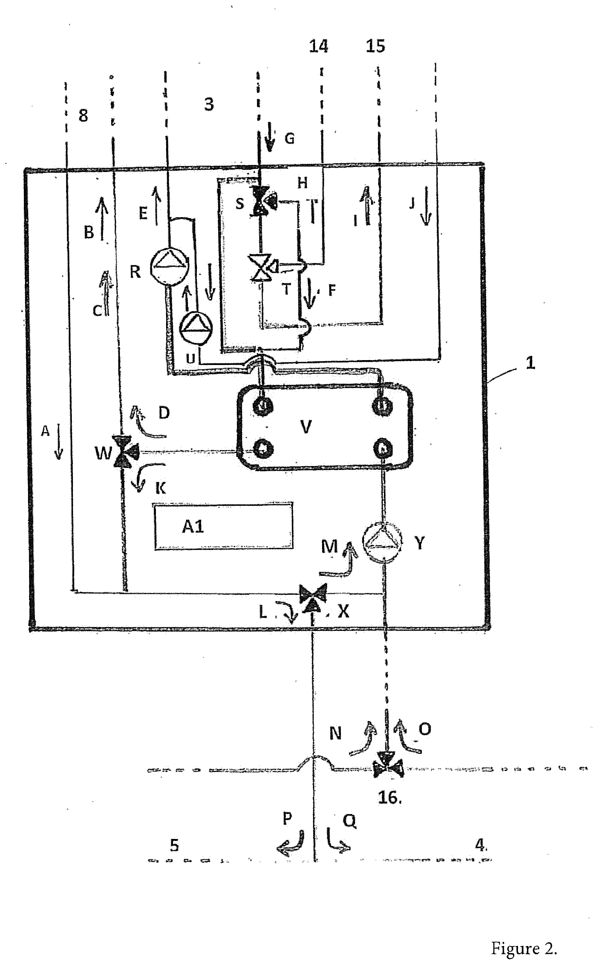

Figure 2 schematically shows the central control unit of the system,

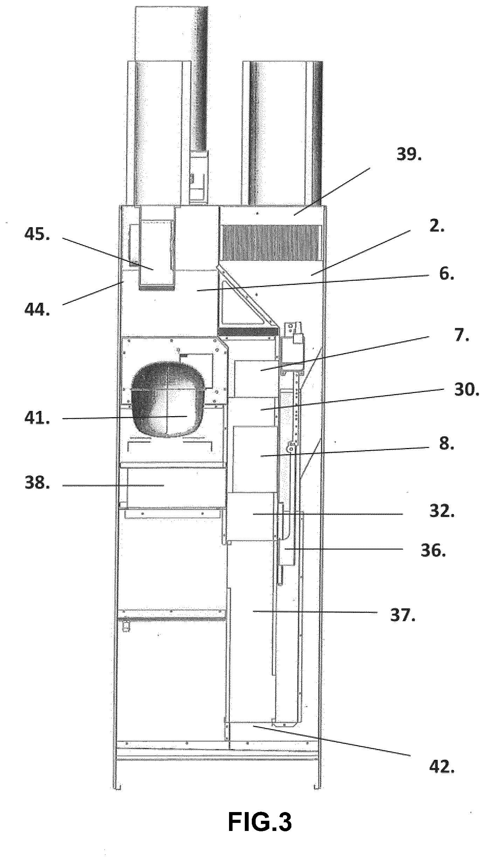

Figure 3 shows an enlarged scheme of the heating and ventilation apparatus of the system in the direction shown in figure 1, and

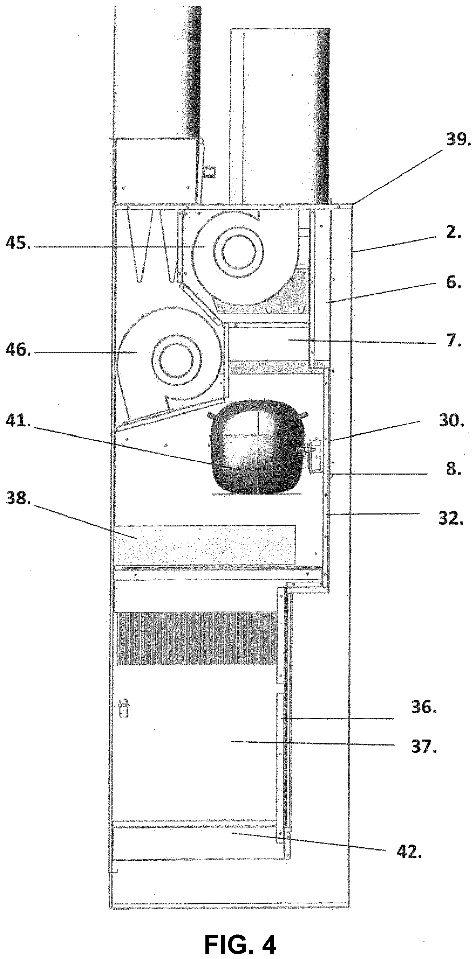

Figure 4 shows the heating and ventilation apparatus of Figure 3 as seen from the left.

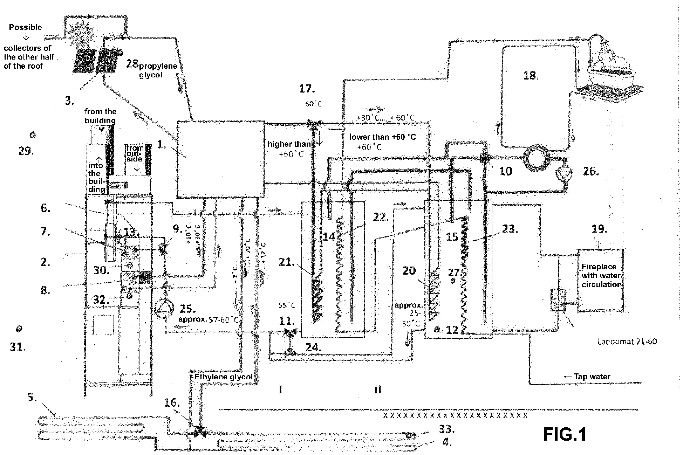

The heating and ventilation system shown in Figure 1 comprises a heating and ventilation apparatus 2 having, in the same housing, a heat pump, a heat exchanger cell 37 operating with countercurrent principle, a preheating radiator 8, and a post-heating radiator 7 for the incoming air, and an heat exchanger 6 in a condenser of the heat pump, said apparatus being capable of direct utilization of different energy sources. Moreover, the system comprises solar collectors 3, a main energy storage unit 14 and a preheating storage unit 15, the volume thereof being approximately double compared to that of the main energy storage unit 14, collector circulation for geothermal heat 5, and a heat accumulator 4 consisting of the tubing for collecting geothermal heat, incorporated in the basement of the building. The system also comprises a fireplace with water circulation 19, burning wood or pellets, and being connected to the preheating storage unit 15 by water circulation provided with a charging assembly.

As efficiently as possible, thermal energy is recovered by the heating and ventilation apparatus from the so-called exhaust air leaving the building, said recovered thermal energy being thereafter totally transferred to the main energy storage unit 14 by the heat exchanger 6 using water. In case the temperature of water recirculated back to the heat exchanger 6 from the energy storage unit 14 exceeds +55 °C, the thermal valve is opened in such a manner that the temperature of + 55 °C of the water directly returning from the main storage unit 14 to the heat exchanger 6 is maintained. Water having a temperature higher than +55 °C is directed to heat the preheating storage unit 15. Once the temperature of the bottom of the preheating storage unit 15 is +27 °C, the circulation from the main storage unit 14 to the preheating storage unit 15 is closed by an electromagnetic valve 24. In this manner, a temperature useful for instance for pre-heating hot tap water is maintained in the preheating storage unit 15 prior to duct of the hot tap water into the main storage unit 14. If necessary, water for floor circulation 18 is always heated or preheated by the preheating storage unit 15.

There are no electrical heating elements in the heating and ventilation apparatus 2. The electrical heating elements 34 of the main storage unit 14 is adjusted to a temperature few degrees Centigrade lower than that produced by the heat pump 2, and thus the electrical heating element 34 is turned on only if the power generated by the heat pump 2 is insufficient. The electrical heating element 35 of the preheating storage unit 15 is adjusted to a temperature of only +24 °C, and accordingly the preheating storage unit 15 is mainly heated by the solar collectors 3, secondarily by the fireplace with water circulation 19, only thirdly by the heat pump of the heating and ventilation apparatus 2, and finally by the electrical heating element 35 and even it only up to said +24 °C. With this arrangement, there is storage capacity in the preheating storage unit 15 for thermal energy produced by the solar collectors 3, and fireplace with water circulation. For most of the year, the thermal energy capacity of the two storage units with their so-called buffer storage is sufficient for heating a building over night, after which the storage units can be charged during daytime either by means of solar energy, or a fireplace with water circulation. Accordingly, even the low input power of about 0.55 kWh of the heat pump 2 is saved each day, thus maximizing the electricity savings.

During hot summer weather, the incoming air is directed through the heat exchanger cell 37 by a deviating plate 36 of the heat pump's control system for incoming air, the exhaust air downstream of the evaporator 38 thus cooling the outside air having an undesirably high temperature. The cooling operation and the deviating plate 36 are controlled by the control logic 39 of the heat pump 2 on the basis of the data from the sensors 29 and 31 for the inside and outside temperatures, respectively. Also during hot weather periods, the energy recovered by the heat pump during the cooling operation is totally transferred to the main storage unit 14. Once the main storage unit 14 is full, having a temperature of about +56 to +60 °C, and the temperature of the preheating storage unit 15 being about +27 °C, the compressor of the heat pump is turned off. An instruction is sent by the central control unit 1 to the water circulating pump Y, and the electromagnetic valve 16 for initiating cooling by means of the circulation loop in the ground 5. In this case, only the electricity input of the circulating pump Y, being only 1/10 of the input power of the heat pump, being low in itself, is used for cooling the building. The heat pump is used for cooling only in cases where heating of the energy storage unit is required. Otherwise, cooling is performed by the input power of the circulating pump Y.

During heating seasons, the incoming air is always directed by the deviating plate 36 through the heat exchanger cell 37 if the outside air is cooler than the exhaust air downstream of the evaporator 38. For instance, if the temperatures of the exhaust air downstream of the evaporator 38 and that of the outside air are respectively +5 °C and -1 °C, the temperature of the incoming air is elevated by almost 4 °C in the heat exchanger cell 37. Another exemplary case relating to mid-winter(December) when no solar heat is available to the preheating radiator 8. As in the previous example, the temperatures considered are those of the exhaust air and the outside air, respectively + 5 °C 25 °C. In the heat exchanger cell 37, the temperature of the incoming air is elevated by about 22 °C to be -3 °C already prior to passing to the preheating radiator 8 heated by the heat accumulator circulation 4, in which preheating radiator 8 the temperature of the incoming air may even be elevated to +14 °C, and accordingly, only energy for +5 °C is needed from the storage unit to the secondary heating radiator. In another exemplary case, room temperature being +21 °C, the temperature of the exhaust air is lowered in the evaporator 38 and the heat exchanger cell 37 altogether by 35 °C, thus giving exhaust air with the temperature of -14 °C. Thermal energy is recovered from the exhaust air as follows. The recovered □T 35 °C is multiplied by the volumetric flow of the exhaust air of about 70 L/s (at present the average value in a standard building), and by the mean air density factor of the exhaust air of 1.2, giving 35 x 70 x 1.2 = 2940 W/h. Respectively, 5 degrees is needed from the energy storage unit for heating the incoming air in this exemplary case. Since it is necessary to maintain slight underpressure in the building (70/+65 L/s), the equation becomes 5 x 65 x 1,2 = 390 W/h. Thus, net yield of ventilation is 2940 - 390 = 2550 W/h.

As a comparison with a heat pump for exhaust air with no heat exchanger cell, the mean temperature of exhaust air from such a heat pump is 0 °C assuming outside and inside temperatures are as in the latter example, the exhaust air thus yielding 21 degrees, thus 21 x 70 x 1.2 = 1764 W/h. Respectively, heating of the incoming air to obtain the recommended +18 °C requires energy for 43 °C (outside temperature -25 °C and inward blowing at +18 °C), thus giving 43 x 65 x 1.2 = 3354 W/h, which is almost ten times compared to the requirement of the system of the invention in a similar situation for heating the incoming air. Even if the temperature of the incoming air only reaches value between +5 and +10 °C, say +7 °C in the preheating radiator 8 a. Energy consumption from the storage unit would then be 18-7 = 11 C x 65 x 1.2 = 858 W/h, it is four times less than when compared to an exhaust air heat pump of a similar size = 3354 W/h.

In the case that more heat for heating the incoming air is available from the solar collectors than from the heat accumulator, solar heat is passed to the preheating radiator 8, and no energy from the energy storage unit 14 is required for the secondary heating radiator 7. That is, even in winter season, thermal energies are always utilized by circulating pumps Y and R whenever feasible.

A fireplace with water circulation 19 optionally acquired as an auxiliary equipment has its respective charging assembly. Being cooler than the main storage unit 14, the preheating storage unit 15 is heated by the fireplace with water circulation 19. In this way, the fireplace with water circulation 19 is more efficiently exploited due to higher coefficient of performance and higher storage capacity of the storage unit 15. If the preheating storage unit 15 is heated by the fireplace with water circulation 19 or solar collectors 3 to a temperature higher than that required by floor heating 18, the energy is only directed by a four-way valve 10 to the floor heating 18 only from the preheating storage unit 15. Thus, the building is heated only by solar energy 3 or by the fireplace with water circulation 19, = renewable energies.

When solar energy is attainable at over +60, it is directed to the hotter main storage unit 14, the fluid leaving the main storage unit 14 being further passed to the preheating storage unit 15 for further cooling. Accordingly, a higher coefficient of performance for the solar collectors 3 is attained. Both storage units 14, 15 are allowed to be heated by the solar collectors to reach the temperature of no higher than +80 °C, followed by preventing boiling in the solar collector system 3 by circulating hot propylene glycol fluid through the heat exchanger V of the heat accumulator's 4 collecting circulation , so that ethylene glycol fluidin the heat accumulator 4 circulation is circulated at a rate twice as high as the rate t of the propylene glycol fluid in the solar circulation. This results in the fact that liquid having a too high temperature is not introduced into the circulation of the heat accumulator 4, thus avoiding damage of the piping thereof. In a way, summer heat is stored for the winter by transferring heat to the heat accumulator 4 arranged under the building. Once temperatures fall to reach freezing values, this heat is then drawn for heating the incoming air in the pre-heating radiator 8. Thermal energy available from the heat accumulator 4 for the preheating radiator 8 is about 1 to 5 kWh depending on the ventilation rate of the building, and weather.

A novel feature of the heating and ventilation apparatus is the operation mode allowing the heat exchanger cell 37 based on a countercurrent principle to co-operate with the heat pump, and with the preheating and secondary heating batteries 8, 7, respectively, always at the right moment. The evaporator 38 of the heat pump first recovers heat from warm air (normally having a temperature of +22 °C) leaving the building, after which the exhaust air has a temperature between +2 and +5 °C. During the heating period, fresh air from the outside passes past the heat exchanger cell 37 if the outside air is warmer than exhaust air downstream of the evaporator, and passes through said cell if the outside air is cooler than the exhaust air downstream of the evaporator, so that the exhaust air heats cold air coming from the outside. Accordingly, the heat exchanger cell is always used when it can be exploited for heating or cooling the outside air coming into the building, depending on specific needs at each time. Incoming air is during heating periods, and cooled during warm seasons More than 6 months in a year, from spring to autumn, the temperature of outside air is often between -2 °C and +16 °C, the heat pump heating the energy storage unit to the required temperature between +55 °C and +60 °C. At this point, it is preferable that the compressor 41 of the heat pump is turned off by the control logic 39 of the apparatus, as the heat exchanger cell 37 having a superior coefficient of performance is thus capable of heating the incoming air to reach the necessary level without any energy intake. 90 % of buildings being at present provided with floor heating 18 using water circulation, all thermal energy for heating the building and for hot tap water is obtained utilizing energy storage units 14, 15. For this reason, it is not necessary to keep the compressor 41 of the heating apparatus running in case the energy storage unit 14 is full. In case the storage unit 14, 15 is filled to capacity by another energy, for instance from the sun 3, or fireplace with water circulation, to give +55 to +60 °C, the compressor 41 is turned off and no electric energy is consumed. There is no risk of contamination with legionella bacteria in the energy storage units 14, 15 of the system since hot tap water is produced with grooved copper coils 20, 21, and accordingly, there is virtually no standing water. When the compressor 41 of the heat pump is turned off, fresh air from outside at -2 to +16 °C is heated without using any electric power only by the heat exchanger cell 37 to attain the temperature recommended for the incoming air, ranging from +18 °C to +19 °C on an average. During hot weather periods in summertime, incoming air from outside is dried and cooled by more than 10 °C by the heat exchanger cell if required. That is, the apparatus also provides a cooling option, and thus cooling may be performed without four-way valves burdening the refrigerating agent system, and causing pressure impulses, the use of said four-way valves also implicating unnecessary interruptions in the operation of the compressor 41. For this reason, the the machinery of the heat pump may be designed to have a very long service life, and to operate highly reliably.

The cooler the water introduced into the condenser of the heat pump, the higher the coefficient of performance of the heat pump. For this reason, secondary heating of incoming air is performed by means of water having a lower temperature recirculated from the bottom of the energy storage unit 14, 15. The reason the bottom of the storage unit 14, 15 being cooler is that the return water of the floor circulation 18 is returned to the bottom. In the winter, the return water is about at +30 to +35 °C. Once the return watert is mixed with the water in the bottom of the storage unit 14, 15, the mixed water at about +40 °C is recirculated to the heat exchanger 6, and if there is need to post-heat the incoming air, the return water is partly directed by an automatic thermostat to the secondary heating radiator 7 where the return water is further cooled. Accordingly, the temperature of the water recirculated to the condenser of the heat pump is as low as possible, thus elevating the efficiency of the heat pump.

By said automatic thermostat, only an amount of warm water may be automatically passed to the secondary radiator 7 resulting in incoming air having a temperature about 3 degrees lower than that of the air in a room, according to the recommendations for ventilation. In this manner, the total amount of the air in the room may be exchanged as the incoming air also flows downward in the room. In addition to improved ventilation, also the relative humidity of the room air remains better. This is important to obtain healthy room air also in the winter during the heating period when room air tends to be too dry which in turn may cause diseases of the respiratory tract. In the novel system, the temperature of the incoming air may be desirably adjusted and stably maintained with an accuracy of 1 to 2 degrees. It is not possible to desirably adjust the temperature of incoming air in commercial apparatuses presently available, in which heating of incoming air is solely performed by the condenser operated by the hot gas of the heat pump. In such apparatuses, the temperature of incoming air may vary over a very wide range. In spring, outside air being for instance at +5 °C, the temperature of incoming air may range between +5 °C and +40 °C.

Cooling by means of circulation in the ground is performed as follows: inside temperature is measured by a sensor 29 of an electronic control means A1, and compared to the value from a sensor 31 for outside temperature, followed by said means sending an instruction to electromagnetic valves 16 and X to direct ethylene glycol liquid through the circulation loop in the ground (5), simultaneously instructing an electromagnetic valve W to direct said liquid to the preheating radiator 8 for cooling incoming air.

Temperature of the temperature sensor 28 of the solar collectors 3 is measured by the electronic control means A1 of the central control unit 1 against the temperature of the temperature sensor 32 in the incoming air duct of the heating and ventilation apparatus 2. If solar heat is available at+7 degrees higher than the temperature of the incoming air as measured by the temperature sensor 32, circulation pumps R and Y are turned on by the control means A1, which also operate the electromagnetic valves X and W to circulate the liquid of the circulation loop in the ground only through the preheating radiator 8, passing past the geothermal and accumulator circulation 4, 5. If the heat available from the solar collectors 3 is still insufficient to heat the preheating storage unit 15, heat having a temperature of +8 to +30 °C is utilized for heating incoming air by transferring heat in the heat exchanger V to the collecting fluid of the heat accumulator 4 circulation, said collector fluid further carrying heat to the preheating radiator 8 to heat the incoming air. Temperatures are measured by the control means A1 with an interval of two minutes. If the temperature of the temperature sensor 28 is only +2 °C higher than that of the sensor 32, circulating pumps R and Y are turned off by the control means A1.

While circulation pumps R and Y are turned on, the temperature of the sensor 28 is measured by the control means A1, and in case said temperature exceeds by +7 °C that of the preheating storage unit 15, solar heat is available at a temperature of about +30 to +60 °C. This heat has a higher temperature than that of the heat to be passed to the preheating radiator 8, but it is not hot enough for the main energy storage unit 14 and thus it is passed to the preheating storage unit 15 controlled by the electromagnetic valve S. Solar energy then heats both the floor heating 18 and hot tap water in the circulation loop 23 of tap water.

If solar heat is available exceeding +60 degrees, it is directly transferred via the electromagnetic valve S and thermal valve T to the main storage unit 14, and from the main storage unit, the residual heat is circulated to the preheating storage unit 15 and further back to solar collectors 3.

The temperature of the sensor 28 of the solar collectors is compared by the electronic control means A1 of the central control unit to the temperature of the sensor 27 of the preheating storage unit. In case both temperatures are above +80 °C, solar heat is transferred to a heat accumulator 4 arranged under the building through an electromagnetic valve S by the heat exchanger V with a circulation pump R. In this case, the circulation pump Y is operated at double the speed of the circulation pump R, so that liquid to be introduced into the circulation loop in the ground 5 has a temperature that is about 50 degrees lower than that of the liquid directed to the heat exchanger V from the solar collectors. This difference of the flow rates of the liquids serves to avoid the introduction of a liquid having a too high temperature to the heat accumulator 4. In the case that the temperature of the liquid to be passed to the heat accumulation circulation reaches a value that is 70 % of the maximum temperature value of the piping, as measured by the temperature sensor 46, circulation pumps R and Y are turned off to protect the piping.

As the night approaches, the whole process mentioned above is shut down in a reversed order, as far as producing solar heat is concerned.

When solar energy is utilized in four different ways as described above, the efficiency of solar energy exploitation for heating the building and hot tap water is increased by a factor of 2 to 3 during a period of one year.

## Claims

1. Method for controlling a hybrid heating and ventilation system of a building, the system comprising a heating and ventilation apparatus (2) having, in the same housing, a heat pump, a heat exchanger cell (37) operating using the countercurrent principle, and at least one heating radiator (7, 8) for the incoming air, further comprising solar collectors (3), main energy storage and preheating storage units (14, 15), a heat accumulator (4), and a central control unit (1) for the system, **characterized in that**
solar energy is utilized in four different ways:
- once propylene glycol circulating in solar collectors (3) has attained a temperature of +8 °C, its heat is transferred by a heat exchanger (V) of the central control unit into ethylene glycol, which is in turn circulated through the preheating radiator (8) in a duct for the incoming air of the heating and ventilation apparatus (2) thus heating the air introduced from outside;
- once the temperature of the propylene glycol from the solar collectors (3) is about +30 °C, propylene glycol is directed by the central control unit (1) to pass through a solar coil (20) in the preheating storage unit (15) to discharge its thermal content, the temperature of said storage unit (15) being maintained by the heating and ventilation apparatus (2) between about +25 and +30 °C;
- once the temperature of the propylene glycol from the solar collectors (3) is over +60 °C, propylene glycol is directed by the central control unit (1) through a solar coil (21) in the main storage unit (14), being further passed via the solar coil (20) of the preheating storage unit (15) to release more heat prior to being recirculated to the solar collectors (3);
- once both storage units (14, 15) have reached the temperature of +80 °C, propylene glycol from the solar cells (3) is directed by the central control unit (1) through its heat exchanger (V) to discharge its heat into an ethylene glycol mixture adjusted to be circulated through a heat accumulator (4) consisting of collector tubes for geothermal energy, and located under the thoroughly isolated basement of a building, with a flow rate twice the flow rate of said propylene glycol, thus preventing boiling, and damage in the solar collectors, while the solar energy is recovered in the heat accumulator, from where said heat is directed during cold winter season to heat the incoming air by circulating propylene glycol through the heat accumulator (4), and preheating radiator (8) in the heating and ventilating apparatus (2).

2. Method according to claim 1, **characterized in that** heat is first recovered from warm air leaving the building by a evaporator (38) of the heat pump of the heating and ventilating apparatus (2), said recovered heat being transferred through a heat exchanger (6) associated with a condensing unit of the heat pump into the heat storage units (14, 15) of the system, the average temperature of the exhaust air downstream of the vaporizing unit (38) being then between +2 and +5 °C, said exhaust air being passed through a heat exchanger cell (37) operating by a countercurrent mode while, during heating periods, the incoming air is passed past the heat exchanger cell (37) if the outside air is warmer than the exhaust air downstream of the vaporizing unit (38), or through the heat exchanger cell (37) if the outside air is cooler than the exhaust air downstream of the vaporizing unit (38), whereas during hot weather periods, the air introduced from outside is cooled by passing through the heat exchanger cell (37).

3. Method according to claim 2, **characterized in that** during seasons with outside temperatures above -2 °C, the logic of the system (39) turns off a compressor (41) of the heat pump once the temperature of the main energy storage unit (22) is in the necessary range of +55 °C to +60 °C, thus allowing air introduced from outside to be heated to the necessary temperature level, that is to about 18 °C, only by the heat exchanger cell (37) without any consumption of electric energy.

4. Method according to any of the above claims, **characterized in that** a floor heating (18) based on water circulation, and hot tap water of the building receive the necessary thermal energy from the energy storage units (14, 15) of the system, these storage units, depending on the season, receiving their thermal energy from the heat exchanger (6) of the heat pump and/or solar collectors (3), and optionally from a fireplace (19) with integrated water circulation connected to the preheating storage unit (23) by water circulation.

5. Method according to claim 4, **characterized in that** to obtain hot tap water, tap water is first circulated through a tap water preheating coil (23) in the preheating storage unit (15), followed by circulation through a tap water coil in the main storage unit (14).

6. Method according to any of the above claims, **characterized in that** water recirculated from the bottom of the energy storage units (14, 15) to the heat exchanger of the condenser (6) is, if necessary, at least partly directed by an automatic thermostat through a secondary heating radiator (7) in the duct for incoming air of the apparatus to obtain incoming air with a temperature of about 3 °C lower than that of the inside air, according to the recommendations for ventilation.

7. Method according to any of the above claims, **characterized in that** for cooling the incoming air during hot weather periods when the compressor (41) of the heat pump is turned off, ethylene glycol is introduced, directed by the central control unit, into the preheating radiator (8) in the duct for incoming air from the circulation loop in the ground (5) connectable to the system's ethylene glycol circulation.

8. System for controlling the heating and ventilation of a building, the system comprising a heating and ventilation apparatus (2) having, in the same housing, a heat pump, a heat exchanger cell (37) operating using the countercurrent principle, and at least one heating radiator (7, 8) for the incoming air, further comprising solar collectors (3), main energy storage and preheating storage units (14, 15), a heat accumulator (4) and a central control unit (1) for the system, **characterized in that** the central control unit (1) is connected:
- to solar collectors (3) by a first propylene glycol circulation loop (E, G) provided with a first circulation pump (R);
- to a preheating radiator (8) arranged in the duct for incoming air of the heating and ventilation apparatus (2) by first ethylene glycol circulation loop (C,A,M,D), provided with a second circulation pump (Y) and first and second electromagnetic three-way valves (X,W), wherein electronic control means (A1) of the central control unit (1) are configured such that said ethylene glycol circulation loop (C,A,M,D) is adjusted to a heat exchange communication with the first propylene glycol circulation loop (E,G) by means of the heat exchanger (V) of the central control unit (1), if solar heat is attainable at about +7 °C higher than the temperature of the incoming air;
- to a solar coil (20), arranged in the preheating storage unit (15), by a second propylene glycol circulation loop (I,J), wherein the electronic control means (A1) are configured such that the second propylene glycol circulation loop (I,J) is connected to the first propylene glycol circulation loop (E,G) of the solar collectors (3) through a third circulation pump (U) a third electromagnetic three-way valve (S) and a thermal three-way valve (T) when solar heat is attainable at about +7 °C higher than the temperature of the preheating storage unit (15);
- to a solar coil (21), arranged in the main storage unit (14), by a third propylene glycol circulation loop (H,J), and further to a solar coil (22) in the preheating storage unit (15), wherein electronic control means (A1) are configured such that the third propylene glycol circulation loop (H,J) is connected to the first propylene glycol circulation loop (E,G) of the solar collectors (3) through the third circulation pump (U), the third electromagnetic three-way valve (S) and the thermal three-way valve (T) when solar heat is attainable at above +60 °C; and
- to a heat accumulator (4) arranged under the building by a second ethylene glycol circulation loop (L,Q,O), wherein electronic control means (A1) are congifured such that said second ethylene glycol circulation loop (L,Q,O) is connected to the heat exchanger (V) of the central control unit (1) through a third ethylene glycol circulation loop (K,L) provided with a circulating pump (Y) and the first and second electronic three-way valves (W,X) when solar heat is attainable at above +80 °C, and wherein the electronic control means (A1) are configured such that in this case the second circulating pump (Y) is adjusted to operate at a rotating speed of at least twice the rotating speed of the first circulating pump (R) arranged in the first propylene glycol circulation loop (E,G) of the solar collectors (3).

9. System according to claim 8, **characterized in that** the volume of the preheating storage unit (15) is about double the volume of the main storage unit (14).

10. System according to claim 9, **characterized in that** the second ethylene glycol circulation loop passing to the heat accumulator (4) is also connected to a circulation loop in the ground (5), and wherein the electronic control means (A1) are configured such that directed by the first and second electronic three-way valves (16, W, and X), the circulation loop in the ground is connected to the preheating radiator (8) arranged in the duct for incoming air if the outside temperature measured by the electronic control means (A1) is higher than the inside temperature.

11. System according to any of the above claims 8-10, **characterized in that** a fireplace with water circulation (19) is connected to the preheating storage unit (15) by water circulation provided with a charging assembly.

## Patentansprüche

1. Verfahren zum Steuern eines Hybridheiz- und Belüftungssystems eines Gebäudes, wobei das System ein Heiz- und Belüftungsgerät (2) umfasst, das in demselben Gehäuse eine Wärmepumpe, eine Wärmetauschzelle (37), die unter Verwenden des Gegenstromkonzepts funktioniert, und mindestens einen Heizkörper (7, 8) für eingehende Luft umfasst, das weiter Solarkollektoren (3), einen Hauptenergiespeicher und Vorheizspeichereinheiten (14, 15), einen Wärmespeicher (4) und eine zentrale Steuereinheit (1) für das System umfasst, **dadurch gekennzeichnet, dass** Solarenergie auf vier unterschiedliche Arten eingesetzt wird:
- sobald Propylenglycol, das in den Solarkollektoren (3) zirkuliert, eine Temperatur von +8 °C erreicht hat, wird Wärme von einem Wärmetauscher (V) der zentralen Steuereinheit in Ethylenglycol übertragen, das seinerseits durch den Vorheizkörper (8) in einer Leitung für die eingehende Luft des Heiz- und Belüftungssystems (2) zirkuliert wird und daher die Luft, die von außen her eingeführt wird, erwärmt;
- sobald die Temperatur des Polypropylenglycols aus den Solarkollektoren (3) etwa +30 °C beträgt, wird das Polypropylenglycol von der zentralen Steuereinheit (1) gelenkt, um durch ein Solar-Coil (20) in der Vorheizspeichereinheit (15) durchzugehen, um seinen Wärmegehalt abzugeben, wobei die Temperatur der Speichereinheit (15) durch das Heiz- und Belüftungsgerät (2) zwischen etwa +25 und +30 °C gehalten wird;
- sobald die Temperatur des Polypropylenglycols von den Solarkollektoren (3) über +60 °C liegt, das Polypropylenglycol von der zentralen Steuereinheit (1) durch ein Solar-Coil (21) in der Hauptspeichereinheit (14) gelenkt wird, wobei es weiter über das Solar-Coil (20) der Vorheizspeichereinheit (15) läuft, um mehr Wärme freizugeben, bevor es zu den Solarkollektoren (3) zurück zirkuliert wird;
- sobald beide Speichereinheiten (14, 15) die Temperatur von +80 °C erreicht haben, Polypropylenglycol aus den Solarzellen (3) von der Steuereinheit (1) durch ihren Wärmetauscher (V) gelenkt wird, um seine Wärme in ein Ethylenglycolgemisch abzugeben, das angepasst ist, um durch einen Wärmespeicher (4) zirkuliert zu werden, der aus Sammelrohren für geothermale Energie besteht und sich unter dem sorgfältig isolierten Tiefgeschoss eines Gebäudes befindet, mit einer Fließrate, die zweimal die Fließrate des Polypropylenglycols beträgt, so dass ein Kochen und Beschädigung in den Solarkollektoren verhindert werden, während die Sonnenenergie in dem Wärmespeicher zurückgewonnen wird, von wo die Wärme während der kalten Winterjahreszeit gelenkt wird, um die eingehende Luft durch Zirkulieren von Polypropylenglycol durch den Wärmespeicher (4) und den Vorheizkörper (8) in dem Heiz- und Belüftungsgerät (2) zu erwärmen.

2. Verfahren nach Anspruch 1, **dadurch gekennzeichnet, dass** die Wärme zuerst aus warmer Luft, die das Gebäude verlässt, von einem Verdampfer (38) der Wärmepumpe des Heiz- und Belüftungsgeräts (2) zurückgewonnen wird, wobei die zurückgewonnene Wärme durch einen Wärmetauscher (6), der mit einer Kondensationseinheit der Wärmepumpe assoziiert ist, in die Wärmespeichereinheiten (14, 15) des Systems transferiert wird, wobei die mittlere Temperatur der Abluft stromabwärts der Verdampfungseinheit (38) zwischen +2 und +5 °C liegt, wobei die Abluft durch eine Wärmetauscherzelle (37) durchgeführt wird, die durch einen Gegenstrommodus funktioniert, während während Heizperioden die eintretende Luft an der Wärmetauscherzelle (37) vorbeigeführt wird, falls die Außenluft wärmer ist als die Abluft stromabwärts der Verdampfungseinheit (38), oder durch die Wärmetauscherzelle (37), falls die Außenluft kühler ist als die Abluft stromabwärts der Verdampfungseinheit (38), während während Heißwetterperioden die Luft, die von außen eingeführt wird, durch Durchgehen durch die Wärmetauscherzelle (37) gekühlt wird.

3. Verfahren nach Anspruch 2, **dadurch gekennzeichnet, dass** während Jahreszeiten mit Außentemperaturen über -2 °C die Logik des Systems (39) einen Verdichter (41) der Wärmepumpe abschaltet, sobald die Temperatur der Hauptenergiespeichereinheit (22) in dem erforderlichen Bereich von +55 °C bis +60 °C liegt, was es erlaubt, Luft, die von außen her eingeführt wird, auf den erforderlichen Temperaturpegel, der etwa 18 °C beträgt, lediglich durch die Wärmetauscherzelle (37) ohne irgendeinen Verbrauch elektrischer Energie zu erwärmen.

4. Verfahren nach einem der vorstehenden Ansprüche, **dadurch gekennzeichnet, dass** eine Bodenheizung (18), die auf Wasserzirkulation basiert, und heißes Leitungswasser des Gebäudes die erforderliche Wärmeenergie von den Energiespeichereinheiten (14, 15) des Systems empfangen, wobei diese Speichereinheiten in Abhängigkeit von der Jahreszeit ihre Wärmeenergie von dem Wärmetauscher (6) der Wärmepumpe und/oder von Solarkollektoren (3) empfangen, und optional von einem Kaminfeuer (19) mit integrierter Wasserzirkulation, die mit der Vorheizspeichereinheit (23) durch Wasserzirkulation verbunden ist.

5. Verfahren nach Anspruch 4, **dadurch gekennzeichnet, dass** zum Erhalten von heißem Leitungswasser das Leitungswasser zuerst durch eine Leitungswasser-Vorheizsteckspule (23) in der Vorheizspeichereinheit (15), gefolgt von Zirkulation durch eine Leitungswasserspule in der Hauptspeichereinheit (14) zirkuliert wird.

6. Verfahren nach einem der vorstehenden Ansprüche, **dadurch gekennzeichnet, dass** Wasser, das von dem Boden der Energiespeichereinheiten (14, 15) zu dem Wärmetauscher (6) des Kondensators falls erforderlich, mindestens teilweise von einem automatischen Thermostat durch einen Sekundärheizkörper (7) in der Leitung für eingehende Luft des Geräts gelenkt wird, um eingehende Luft mit einer Temperatur zu erhalten, die um etwa 3 °C niedriger ist als die der Innenluft, gemäß den Empfehlungen für Belüftung.

7. Verfahren nach einem der vorstehenden Ansprüche, **dadurch gekennzeichnet, dass** zum Kühlen der eingehenden Luft während Heißwetterperioden, wenn der Verdichter (41) der Wärmepumpe abgeschaltet ist, Ethylenglycol, von der zentralen Steuereinheit in den Vorheizkörper (8) für eingehende Luft von der Zirkulationsschleife in dem Boden (5), die mit der Ethylenglycolzirkulation des Systems verbindbar ist, gelenkt, eingeführt wird.

8. System zum Steuern der Heizung und Belüftung und Belüftung eines Gebäudes, wobei das System ein Heiz- und Belüftungsgerät (2) umfasst, das in demselben Gehäuse eine Wärmepumpe, eine Wärmetauschzelle (37), die unter Verwenden des Gegenstromkonzepts funktioniert, und mindestens einen Heizkörper (7, 8) für eingehende Luft aufweist, das weiter Solarkollektoren (3), einen Hauptenergiespeicher und Vorheizspeichereinheiten (14, 15), einen Wärmespeicher (4) und eine zentrale Steuereinheit (1) für das System umfasst, **dadurch gekennzeichnet, dass** die zentrale Steuereinheit (1) verbunden ist mit:
- Solarkollektoren (3), durch eine erste Polypropylenglycol-Zirkulationsschleife (E, G), die mit einer ersten Umwälzpumpe (R) versehen ist,
- einem Vorheizkörper (8), der in der Leitung für eingehende Luft des Heiz- und Belüftungsgeräts (2) eingerichtet ist, durch die erste Polyäthylen-Zirkulationsschleife (C, A, M, D), die mit einer zweiten Umwälzpumpe (Y) und einem ersten und einem zweiten elektromagnetischen Dreiwegeventil (X, W) versehen ist, wobei elektronische Steuermittel (A1) der zentralen Steuereinheit (1) derart konfiguriert sind, dass die Ethylenglycol-Zirkulationsschleife (C, A, M, D) an eine Wärmetauschkommunikation mit der ersten Polypropylenglycol-Zirkulationsschleife (E, G) mittels des Wärmetauschers (V) der zentralen Steuereinheit (1) angepasst wird, falls Solarwärme mit etwa +7 °C höher als die Temperatur der eingehenden Luft erreichbar ist;
- einem Solar-Coil (20), das in der Vorheizspeichereinheit (15) eingerichtet ist, durch eine zweite Polypropylenglycol-Zirkulationsschleife (I, J), wobei die elektronischen Steuermittel (A1) derart konfiguriert sind, dass die zweite Polypropylenglycol-Zirkulationsschleife (I, J) mit der ersten Polypropylenglycol-Zirkulationsschleife (E, G) der Solarkollektoren (3) durch eine dritte Umwälzpumpe (U), ein drittes elektromagnetisches Dreiwegeventil (S) und ein thermisches Dreiwegeventil (T) verbunden wird, wenn Solarwärme mit etwa +7 °C höher als die Temperatur der Vorheizspeichereinheit (15) erreichbar ist;
- einem Solar-Coil (21), das in der Hauptspeichereinheit (14) eingerichtet ist, durch eine dritte Polypropylenglycol-Zirkulationsschleife (H, J), und weiter mit einem Solar-Coil (22) in der Vorheizspeichereinheit (15), wobei elektronische Steuermittel (A1) derart konfiguriert sind, dass die dritte Polypropylenglycol-Zirkulationsschleife (H, J) mit der ersten Polypropylenglycol-Zirkulationsschleife (E, G) der Solarkollektoren (3) durch eine dritte Umwälzpumpe (U), das dritte elektromagnetische Dreiwegeventil (S) und das thermische Dreiwegeventil (T) verbunden wird, wenn Solarwärme mit etwa +60 °C höher erreichbar ist;
- mit einem Wärmespeicher (4), der unter dem Gebäude eingerichtet ist, durch eine zweite Ethylenglycol-Zirkulationsschleife (L, Q, O), wobei elektronische Steuermittel (A1) derart konfiguriert sind, dass die zweite Ethylenglycol-Zirkulationsschleife (L, Q, O) mit dem Wärmetauscher (V) der zentralen Steuereinheit (1) durch eine dritte Ethylenglycol-Zirkulationsschleife (K, L) verbunden wird, die mit einer Umwälzpumpe (Y) und dem ersten und dem zweiten elektronischen Dreiwegeventil (W, X) versehen ist, wenn die Solarwärme mit über +80 °C erreichbar ist, und wobei die elektronischen Steuermittel (A1) derart konfiguriert sind, dass in diesem Fall die zweite Umwälzpumpe (Y) eingestellt wird, um mit einer Drehzahl von mindestens zweimal der Drehzahl der ersten Umwälzpumpe (R), die in der ersten Polypropylenglycol-Zirkulationsschleife (E, G) der Solarkollektoren (3) eingerichtet ist, zu funktionieren.

9. System nach Anspruch 8, **dadurch gekennzeichnet, dass** das Volumen der Vorheizspeichereinheit (15) etwa doppelt so groß ist wie das Volumen der Hauptspeichereinheit (14).

10. System nach Anspruch 9, **dadurch gekennzeichnet, dass** die zweite Ethylenglycol-Zirkulationsschleife, die durch den Wärmespeicher (4) durchgeht, auch mit einer Zirkulationsschleife in dem Boden (5) verbunden ist, und wobei die elektronischen Steuermittel (A1) derart konfiguriert sind, dass die Zirkulationsschleife in dem Boden, von dem ersten und dem zweiten elektronischen Dreiwegeventil (16, W und X) gelenkt mit dem Vorheizkörper (8), der in der Leitung für eingehende Luft eingerichtet ist, verbunden wird, falls die Außentemperatur, die von den elektronischen Steuermitteln (A1) gemessen wird, höher ist als die Innentemperatur.

11. System nach einem der vorstehenden Ansprüche 8 bis 10, **dadurch gekennzeichnet, dass** ein Kaminfeuer mit Wasserzirkulation (19) mit der Vorheizspeichereinheit (15) durch Wasserzirkulation, die mit einer Ladeanordnung versehen ist, verbunden ist.

## Revendications

1. Procédé permettant de commander un système de chauffage et de ventilation hybride d'un bâtiment, le système comprenant un appareil de chauffage et de ventilation (2) ayant, dans le même logement, une pompe à chaleur, une cellule d'échangeur de chaleur (37) fonctionnant en utilisant le principe de contre-courant, et au moins un radiateur de chauffage (7, 8) pour l'air entrant, comprenant en outre des collecteurs solaires (3), des unités de stockage d'énergie et de stockage de préchauffage principales (14, 15), un accumulateur de chaleur (4), et une unité de commande centrale (1) pour le système, **caractérisé en ce que**
une énergie solaire est utilisée de quatre manières différentes :
- une fois qu'un propylène glycol circulant dans des collecteurs solaires (3) a atteint une température de +8°C, sa chaleur est transférée par un échangeur de chaleur (V) de l'unité de commande centrale dans un éthylène glycol, qui est à son tour mis en circulation à travers le radiateur de préchauffage (8) dans un conduit pour l'air entrant de l'appareil de chauffage et de ventilation (2) en chauffant ainsi l'air introduit depuis l'extérieur ;
- une fois que la température du propylène glycol provenant des collecteurs solaires (3) est d'environ +30°C, le propylène glycol est dirigé par l'unité de commande centrale (1) pour traverser une bobine solaire (20) dans l'unité de stockage de préchauffage (15) pour décharger son contenu thermique, la température de ladite unité de stockage (15) étant maintenue par l'appareil de chauffage et de ventilation (2) entre environ +25 et +30°C ;
- une fois que la température du propylène glycol provenant des collecteurs solaires (3) est supérieure à +60°C, le propylène glycol est dirigé par l'unité de commande centrale (1) à travers une bobine solaire (21) dans l'unité de stockage principale (14), en passant en outre par la bobine solaire (20) de l'unité de stockage de préchauffage (15) pour libérer plus de chaleur avant d'être remis en circulation dans les collecteurs solaires (3) ;
- une fois que les deux unités de stockage (14, 15) ont atteint la température de +80°C, le propylène glycol provenant des cellules solaires (3) est dirigée par l'unité de commande centrale (1) à travers son échangeur de chaleur (V) pour décharger sa chaleur dans un mélange d'éthylène glycol ajusté pour être mis en circulation à travers un accumulateur de chaleur (4) se composant de tubes de collecteur pour une énergie géothermique, et situé au-dessous du sous-sol complètement isolé d'un bâtiment, avec un débit égal à deux fois le débit dudit propylène glycol, en empêchant de ce fait l'ébullition et la détérioration des collecteurs solaires, pendant que l'énergie solaire est récupérée dans l'accumulateur de chaleur, depuis lequel ladite chaleur est dirigée, pendant la saison froide hivernale, pour chauffer l'air entrant par la mise en circulation du propylène glycol à travers l'accumulateur de chaleur (4), et le radiateur de préchauffage (8) dans l'appareil de chauffage et de ventilation (2).

2. Procédé selon la revendication 1, **caractérisé en ce que** la chaleur est d'abord récupérée à partir de l'air chaud quittant le bâtiment par un évaporateur (38) de la pompe à chaleur de l'appareil de chauffage et de ventilation (2), ladite chaleur récupérée étant transférée à travers un échangeur de chaleur (6) associé à une unité de condensation de la pompe à chaleur dans les unités de stockage de chaleur (14, 15) du système, la température moyenne de l'air d'évacuation en aval de l'unité de vaporisation (38) étant ensuite entre +2 et +5°C, ledit air d'évacuation étant passé à travers une cellule d'échangeur de chaleur (37) fonctionnant par un mode à contre-courant pendant que, au cours des périodes de chauffage, l'air entrant est passé au-delà de la cellule d'échangeur de chaleur (37) si l'air extérieur est plus chaud que l'air d'évacuation en aval de l'unité de vaporisation (38), ou à travers la cellule d'échangeur de chaleur (37) si l'air extérieur est plus froid que l'air d'évacuation en aval de l'unité de vaporisation (38), tandis que, au cours de périodes de temps chaud, l'air introduit depuis l'extérieur est refroidi en traversant la cellule d'échangeur de chaleur (37).

3. Procédé selon la revendication 2, **caractérisé en ce que**, au cours de saisons avec des températures extérieures supérieures à -2°C, la logique du système (39) met hors tension un compresseur (41) de la pompe à chaleur une fois que la température de l'unité de stockage d'énergie principale (22) est dans la plage nécessaire de +55°C à +60°C, en permettant ainsi à l'air introduit depuis l'extérieur d'être chauffé au niveau de température nécessaire, qui est d'environ 18°C, uniquement par la cellule d'échangeur de chaleur (37) sans aucune consommation d'énergie électrique.

4. Procédé selon l'une quelconque des revendications précédentes, **caractérisé en ce qu'**un chauffage au sol (18) basé sur une circulation d'eau, et l'eau chaude du robinet du bâtiment reçoivent l'énergie thermique nécessaire en provenance des unités de stockage d'énergie (14, 15) du système, ces unités de stockage, selon la saison, recevant leur énergie thermique en provenance de l'échangeur de chaleur (6) de la pompe à chaleur et/ou des collecteurs solaires (3), et facultativement d'une cheminée (19) avec une circulation d'eau intégrée reliée à l'unité de stockage de préchauffage (23) par circulation d'eau.

5. Procédé selon la revendication 4, **caractérisé en ce que**, pour obtenir de l'eau chaude du robinet, l'eau du robinet est d'abord mise en circulation à travers une bobine de préchauffage d'eau du robinet (23) dans l'unité de stockage de préchauffage (15), puis est mise en circulation à travers une bobine d'eau du robinet dans l'unité de stockage principale (14).

6. Procédé selon l'une quelconque des revendications précédentes, **caractérisé en ce que** l'eau remise en circulation depuis le fond des unités de stockage d'énergie (14, 15) vers l'échangeur de chaleur du condensateur (6) est, si nécessaire, au moins partiellement dirigée par un thermostat automatique à travers un radiateur de chauffage secondaire (7) dans le conduit pour air entrant de l'appareil afin d'obtenir un air entrant avec une température inférieure d'environ 3°C à celle de l'air intérieur, selon les recommandations de ventilation.

7. Procédé selon l'une quelconque des revendications précédentes, **caractérisé en ce que**, pour le refroidissement de l'air entrant au cours de périodes de temps chaud lorsque le compresseur (41) de la pompe à chaleur est hors tension, de l'éthylène glycol est introduit, dirigé par l'unité de commande centrale, dans le radiateur de préchauffage (8) dans le conduit d'air entrant depuis la boucle de circulation dans le sol (5) pouvant être reliée à la circulation d'éthylène glycol du système.

8. Système permettant de commander le chauffage et la ventilation d'un bâtiment, le système comprenant un appareil de chauffage et de ventilation (2) ayant, dans le même logement, une pompe à chaleur, une cellule d'échangeur de chaleur (37) fonctionnant en utilisant le principe de contre-courant, et au moins un radiateur de chauffage (7, 8) pour l'air entrant, comprenant en outre des collecteurs solaires (3), des unités de stockage d'énergie et de stockage de préchauffage principales (14, 15), un accumulateur de chaleur (4), et une unité de commande centrale (1) pour le système, **caractérisé en ce que** l'unité de commande centrale (1) est reliée à :
- des collecteurs solaires (3) par une première boucle de circulation de propylène glycol (E, G) pourvue d'une première pompe de circulation (R) ;
- un radiateur de préchauffage (8) agencé dans le conduit d'air entrant de l'appareil de chauffage et de ventilation (2) par une première boucle de circulation d'éthylène glycol (C, A, M, D), pourvue d'une deuxième pompe de circulation (Y) et de première et deuxième vannes électromagnétiques tridirectionnelles (X, W), dans lequel des moyens de commande électroniques (A1) de l'unité de commande centrale (1) sont configurés de sorte que ladite boucle de circulation d'éthylène glycol (C, A, M, D) soit ajustée pour une communication d'échange de chaleur avec la première boucle de circulation de propylène glycol (E, G) au moyen de l'échangeur de chaleur (V) de l'unité de commande centrale (1), si une chaleur solaire atteint une température supérieure d'environ +7°C à la température de l'air entrant ;
- une bobine solaire (20), agencée dans l'unité de stockage de préchauffage (15), par une deuxième boucle de circulation de propylène glycol (I, J), dans lequel les moyens de commande électroniques (A1) sont configurés de sorte que la deuxième boucle de circulation de propylène glycol (I, J) soit reliée à la première boucle de circulation de propylène glycol (E, G) des collecteurs solaires (3) à travers une troisième pompe de circulation (U), une troisième vanne électromagnétique tridirectionnelle (S) et une vanne thermique tridirectionnelle (T) lorsque la chaleur solaire atteint une température supérieure d'environ +7°C à la température de l'unité de stockage de préchauffage (15) ;
- une bobine solaire (21), agencée dans l'unité de stockage principale (14), par une troisième boucle de circulation de propylène glycol (H, J), et en outre une bobine solaire (22) dans l'unité de stockage de préchauffage (15), dans lequel des moyens de commande électroniques (A1) sont configurés de sorte que la troisième boucle de circulation de propylène glycol (H, J) soit reliée à la première boucle de circulation de propylène glycol (E, G) des collecteurs solaires (3) à travers la troisième pompe de circulation (U), la troisième vanne électromagnétique tridirectionnelle (S) et la vanne thermique tridirectionnelle (T) lorsque la chaleur solaire atteint une température supérieure à +60°C ; et
- un accumulateur de chaleur (4) agencé au-dessous du bâtiment par une deuxième boucle de circulation d'éthylène glycol (L, Q, O), dans lequel des moyens de commande électroniques (A1) sont configurés de sorte que ladite deuxième boucle de circulation d'éthylène glycol (L, Q, O) soit reliée à l'échangeur de chaleur (V) de l'unité de commande centrale (1) à travers une troisième boucle de circulation d'éthylène glycol (K, L) pourvue d'une pompe de circulation (Y) et des première et deuxième vannes électroniques tridirectionnelles (W, X) lorsque la chaleur solaire atteint une température supérieure à +80°C, et dans lequel les moyens de commande électroniques (A1) sont configurés de sorte que, dans ce cas, la deuxième pompe de circulation (Y) soit ajustée pour fonctionner à une vitesse de rotation égale à au moins deux fois la vitesse de rotation de la première pompe de circulation (R) agencée dans la première boucle de circulation de propylène glycol (E, G) des collecteurs solaires (3).

9. Système selon la revendication 8, **caractérisé en ce que** le volume de l'unité de stockage de préchauffage (15) est égal environ au double du volume de l'unité de stockage principale (14).

10. Système selon la revendication 9, **caractérisé en ce que** la deuxième boucle de circulation d'éthylène glycol passant à l'accumulateur de chaleur (4) est également reliée à une boucle de circulation dans le sol (5), et dans lequel les moyens de commande électroniques (A1) sont configurés de manière à être dirigés par les première et deuxième vannes électroniques tridirectionnelles (16, W, X), la boucle de circulation dans le sol est reliée au radiateur de préchauffage (8) agencé dans le conduit d'air entrant si la température extérieure mesurée par les moyens de commande électroniques (A1) est supérieure à la température intérieure.

11. Système selon l'une quelconque des revendications 8 à 10, **caractérisé en ce qu'**une cheminée avec une circulation d'eau (19) est reliée à l'unité de stockage de préchauffage (15) par une circulation d'eau pourvue d'un assemblage de chargement.
